# EUROPEAN PATENT APPLICATION

(11) **EP 2 486 828 A1**
(43) Date of publication of application: **15.08.2012**
(21) Application number: 10821910.6
(22) Date of filing: 30.09.2010
(51) Int. Cl.: A47C 27/12, B68G 11/02

(54) **CUSHION STRUCTURE AND VEHICLE SEAT**

(30) Priority: 05.10.2009 JP 2009231823
(71) Applicant: Delta Tooling Co., Ltd., Hiroshima-shi, Hiroshima 736-0084 (JP)
(72) Inventor: FUJITA Etsunori, Hiroshima-shi Hiroshima 736-0084 (JP); OGURA Yumi, Hiroshima-shi Hiroshima 736-0084 (JP); MIZUNO Hirofumi, Hiroshima-shi Hiroshima 736-0084 (JP); KAWASAKI Seiji, Hiroshima-shi Hiroshima 736-0084 (JP); WAGATA Shigeki, Hiroshima-shi Hiroshima 736-0084 (JP)
(74) Representative: HOFFMANN EITLE
(86) International application number: PCT/JP2010/067059
(87) International publication number: WO 2011/043239

(57) **Abstract**

Disclosed is a cushion structure that does not cause pain to a user when seated and that promotes steady breathing.

Three dimensional knit fabrics (101, 102) are formed as a laminate (100) of a plurality of stacked layers, and a minimal-layer structure section (103), which does not possess at least even a single intermediate layer between the topmost layer and the bottommost layer, is provided on the approximate center section in the width direction in a prescribed width and in a prescribed length from front to back. The approximate center section in the width direction of the cushion structure (10) is the region upon which the area around the sacrum is positioned when the user is seated. Although the pelvis moves when the user breathes, contact with the sacrum is softened and stable breathing can be encouraged as a result of the approximate center section in the width direction being a minimal-layer structure section. In contrast, since both sides surrounding the approximate center section in the width direction are intermediate layer structure sections (104) in which at least one layer more than in the minimal-layer structure section (103) has been stacked, it is possible to prevent the sit bones on both side of the sacrum from hitting the bottom during vertical vibration.

## Description

The present invention relates to a cushion structure used for a vehicle seat of automobiles, aircrafts, trains, etc., and a vehicle seat including the cushion structure.

### BACKGROUND ART

The applicant has proposed various cushion structures with a three-dimensional solid knitted fabric, a urethane material, etc., arranged on a base cushion elastically supported by a torsion bar etc. For example, Patent Document 1 proposes a vehicle seat having a plurality of spring elements configured by disposing a portion using only three-dimensional solid knitted fabric and a portion with stacked urethane material or by dividing urethane material into a plurality of parts so as to vary the dynamic spring constants of the respective spring elements. This allows different spring elements to mainly act depending on characteristics (such as frequency and amplitude) of input vibrations and consequently produces an effect of efficiently absorbing various vibrations with different characteristics from low-frequency and large-amplitude vibrations to high-frequency and small-amplitude vibrations.

Patent Document 2 discloses a seat cushion material having a cushion structure stacked on a cushion pan and elastically supported by a torsion bar. This disclosed cushion structure has a urethane material or a fiber cushion sandwiched and stacked between two three-dimensional solid knitted fabrics.

### PRIOR ART DOCUMENTS

### Patent Documents

Patent Document 1: WO2007/0077699
Patent Document 2: Japanese Laid-Open Patent Publication No. 2009-493

### SUMMARY OF THE INVENTION

### Problem to Be Solved by the Invention

The cushion structures disclosed in Patent Documents 1 and 2 use three-dimensional solid knitted fabrics and therefore are characteristically excellent in the vibration absorbability described above (mainly in vertical vibration absorbability) despite a thin size and a light weight. However, constant improvement in vibration absorbability and shock absorbability are requested for vehicle seats and it is expected to develop a cushion structure excellent in vibration absorbability as compared to conventional structures. Particularly, recently rapidly spreading electric and hybrid vehicles have increased sprung mass due to mass of batteries unlike reciprocating engine vehicles etc. Therefore, while vertical vibrations are reduced due to mass effect, an effect of inertia force is easily produced in the longitudinal direction because of the increase in sprung mass, resulting in increased vibrations and pitching in the longitudinal direction. To reduce the effects of the inertia force and acceleration on a body, it is desired to reduce relative displacement, relative speed, relative acceleration, and relative jerk between a seat and a person. It is also desired that a cushion structure can reduce pain due to compression in the seated state, ensure a more stable posture, and allow body motion to facilitate breathing movement for providing comfortable feeling to a person sitting on a vehicle seat.

The present invention was conceived in view of the above and a problem of the present invention is to provide a cushion structure generating no pain in the seated state and easily facilitating stable breathing. Additionally, a problem of the present invention is to provide a cushion structure suitable for a vehicle seat excellent in vibration-energy and impact-energy absorption performances as compared to conventional seats and particularly suitable for electric and hybrid vehicles. Furthermore, a problem of the present invention is to provide a vehicle seat including these cushion structures.

### Means for Solving the Problem

To solve the problem, a cushion structure of the present invention is a cushion structure for a vehicle seat having three-dimensional solid knitted fabrics, the three-dimensional solid knitted fabrics formed as a laminate of a plurality of stacked layers, the cushion structure being disposed with a minimal-layer structure portion not having at least one intermediate layer between a topmost layer and a bottommost layer in an approximate center portion in a width direction in a predetermined width and a predetermined longitudinal length.

Preferably, both side portions of the laminate are maximal-layer structure portions having the three-dimensional solid knitted fabrics stacked at least two layers more than the minimal-layer structure portion, and intermediate layer structure portions with the number of layers greater than the minimal-layer structure portion and fewer than the maximal-layer structure portions are formed between the minimal-layer structure portion and the maximal-layer structure portions. In particular, preferably, the minimal-layer structure portion consists of two layers that are the topmost layer and the bottommost layer; more preferably, the minimal-layer structure portion consists of two layers that are the topmost layer and the bottommost layer; the intermediate layer structure portions consist of three layers including the topmost layer and the bottommost layer; and the maximal-layer structure portions consist of four layers including the topmost layer and the bottommost layer.

Preferably, the cushion structure is formed by using the two three-dimensional solid knitted fabrics; a first three-dimensional solid knitted fabric is folded back inward from side edges except an area having a predetermined width and a predetermined length in the approximate center portion in the width direction; a second three-dimensional solid knitted fabric is folded back inward from side edges in a folded width shorter than a folded width of the first three-dimensional solid knitted fabric; the maximal-layer structure portions are made up of overlap areas between folded portions of the first three-dimensional solid knitted fabric and folded portions of the second three-dimensional solid knitted fabric; the intermediate layer structure portions are made up of overlap portions between the folded portions of the first three-dimensional solid knitted fabric and an area without the folded portions of the second three-dimensional solid knitted fabric; and the minimal-layer structure portion is made up of an overlap portion between an area without the folded portions of the first three-dimensional solid knitted fabric and the area without the folded portions of the second three-dimensional solid knitted fabric.

More preferably, the second three-dimensional solid knitted fabric is located on the lower side with the first three-dimensional solid knitted fabric located on the upper side of the second three-dimensional solid knitted fabric, and the folded portions of the first three-dimensional solid knitted fabric are formed by folding toward the lower side while the folded portions of the second three-dimensional solid knitted fabric are formed by folding toward the upper side.

Preferably, three layers from the topmost layer to the bottommost layer are collectively restrained in regions of the intermediate layer structure portions adjacent to the minimal-layer structure portion and only two overlapping intermediate layers are restrained in the maximal-layer structure portions and, more preferably, the three layers from the topmost layer to the bottommost layer are collectively restrained by sewing in the regions of the intermediate layer structure portions adjacent to the minimal-layer structure portion and only the two overlapping intermediate layers are restrained by sewing in the maximal-layer structure portions.

Preferably, the first three-dimensional solid knitted fabric and the second three-dimensional solid knitted fabric have a thickness ranging from 6 to 8 mm.

Preferably, a surface rigidity imparting cushion member for imparting predetermined surface rigidity is further disposed under the second three-dimensional solid knitted fabric. Preferably, the surface rigidity imparting cushion member is made of bead foam or a polypropylene-resin plate-like body.

Preferably, the cushion structure or the surface rigidity imparting cushion member is configured to be used as a floating device. In this case, preferably, the surface rigidity imparting cushion member is configured to be waterproofed on at least one surface. Preferably, the cushion structure is configured to be waterproofed on outer peripheral surfaces.

Preferably, the three-dimensional solid knitted fabrics and the surface rigidity imparting cushion member are configured to be covered with a covering material.

A vehicle seat of the present invention is a vehicle seat comprising a base cushion material extended between a front edge frame and a rear edge frame of a cushion frame, wherein the cushion structure is disposed on the base cushion. Preferably, with regard to the front edge frame and the rear edge frame, at least the front edge frame is elastically and longitudinally rotatably supported by a torsion bar.

Preferably, the cushion structure and the base cushion are configured to be coupled by one hook-and-loop fastener attached to one of facing surfaces thereof and the other hook-and-loop fastener attached to the other facing surface thereof. More preferably, the one hook-and-loop fastener is attached without fixing both side edge portions, and the other hook-and-loop fastener is attached to project with an approximately U-shaped cross section. In this case, the one hook-and-loop fastener can be attached to a front surface of the base cushion, and the other hook-and-loop fastener can be attached to a back side of the cushion structure.

### Effects of the Invention

In the cushion structure of the present invention, the three-dimensional solid knitted fabrics are formed as a laminate of a plurality of stacked layers, and the cushion structure is disposed with the minimal-layer structure portion not having at least one intermediate layer between the topmost layer and the bottommost layer in the approximate center portion in the width direction in a predetermined width and in a predetermined longitudinal length. The approximate center portion in the width direction of the cushion structure is a region on which the area around the sacrum is positioned when a person is seated. Although the pelvis moves when a person breathes, contact with the sacrum is softened and stable breathing can be encouraged since the approximate center portion in the width direction is the minimal-layer structure portion. In contrast, since both sides surrounding the approximate center section in the width direction are the intermediate layer structure portions having at least one more stacked layer than the minimal-layer structure section, the ischial tuberosities on both sides of the sacrum can be prevented from hitting the bottom during vertical vibration. Since the maximal-layer structure portions are formed on the outside of the intermediate layer structure portions, rigidity is increased in the both side portions and the buttocks can stably be supported.

Preferably, the layers of the overlapping three-dimensional solid knitted fabrics are configured such that three layers from the topmost layer to the bottommost layer are collectively restrained by sewing etc., in a region of the intermediate layer structure portion adjacent to the minimal-layer structure portion and that only two overlapping intermediate layers are restrained by sewing etc., in the maximal-layer structure portion. Such restraint facilitates longitudinal and lateral movements of the bottommost layer of the three-dimensional solid knitted fabrics and generates a restoring force. This leads to formation of a simple spring-dashpot system and aids smooth breathing movement without hampering the motion of the pelvis associated with breathing. Vibrations in the longitudinal direction and pitching can efficiently be absorbed. Therefore, the present invention is particularly suitable for electric and hybrid vehicles causing larger vibrations in the longitudinal direction and pitching due to increase in sprung mass. When bead form is used as the surface rigidity imparting cushion member, the cushion structure is usable as a floating device that is an emergency evacuation tool.

### BRIEF DESCRIPTION OF DRAWINGS

[Fig. 1] Fig. 1(a) is a perspective view of an automotive seat that is a vehicle seat according to one embodiment of the present invention; Fig. 1 (b) is a plain view of a cushion structure used in the automotive seat; and Fig. 1(c) is a side view of Fig. 1(b).
[Fig. 2] Fig. 2 (a) is a cross-sectional view taken along a line A-A of Fig. 1(a) and Fig. 2(b) is a cross-sectional view taken along a line B-B of Fig. 1(a).
[Fig. 3] Fig. 3 is a perspective view of the automotive seat depicted in Fig. 1(a) with the cushion structure removed.
[Fig. 4] Fig. 4 is an exploded perspective view of the cushion structure.
[Fig. 5] Fig. 5 (a) is a plain view (a view of an arrow C of Fig. 4) of a laminate of three-dimensional solid knitted fabrics used in the cushion structure and Fig. 5 (b) is a cross-sectional view taken along a line D-D of Fig. 5(a).
[Fig. 6] Fig. 6 is a graph of a test result of a combustion test of the three-dimensional solid knitted fabrics.
[Fig. 7] Figs. 7(a) and 7(b) are diagrams for explaining a mounting method when the cushion structure is jointed to a base cushion by using hook-and-loop fasteners. Fig. 7 is a side view of the vehicle seat of Fig. 1 disposed with a belt anchor member.
[Fig. 8] Fig. 8 is a perspective view of an aircraft seat that is a vehicle seat according to another embodiment of the present invention.
[Fig. 9] Fig. 9 (a) is a conceptual diagram of a cushion structure of a comparison example used in measurement of load-displacement characteristics and Fig. 9(b) is a conceptual diagram of the cushion structure according to the embodiment of the present invention.
[Fig. 10] Fig. 10 is a diagram of a measurement result of the load-displacement characteristics measured using a pressure plate with a diameter of 98 mm.
[Fig. 11] Fig. 11 is a diagram of a measurement result of the load-displacement characteristics measured using a pressure plate with a diameter of 200 mm.
[Fig. 12] Figs. 12(a) to 12(d) are diagrams of body pressure distribution of the cushion structures of the comparison examples; Fig. 12 (e) is a diagram of body pressure distribution of the cushion structure according to the embodiment of the present invention; and Fig. 12 (f) is a graph of maximum pressure values generated at the ischial tuberosities.

### MODES FOR CARRYING OUT THE INVENTION

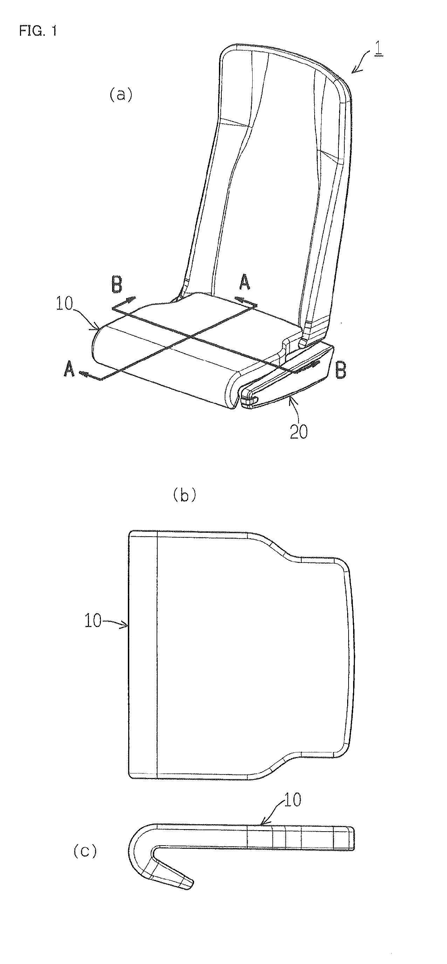

The present invention will be described in more details with reference to embodiments of the present invention depicted in the drawings. Fig. 1(a) is a perspective view of an automotive seat 1 that is a vehicle seat according to one embodiment of the present invention. As depicted in Figs. 1 to 3, a seat cushion portion of the automotive seat 1 is disposed with a cushion frame 20 making up a seat cushion portion and a base cushion 30 supported by the cushion frame 20, and a cushion structure 10 is disposed on the base cushion 30.

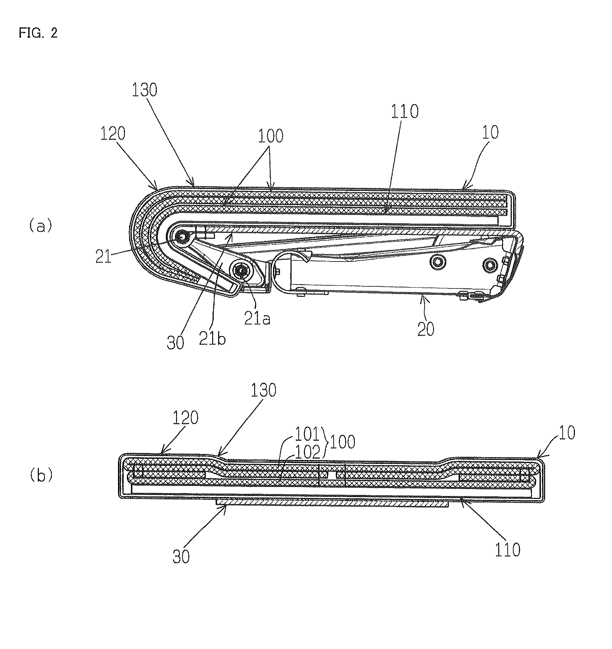

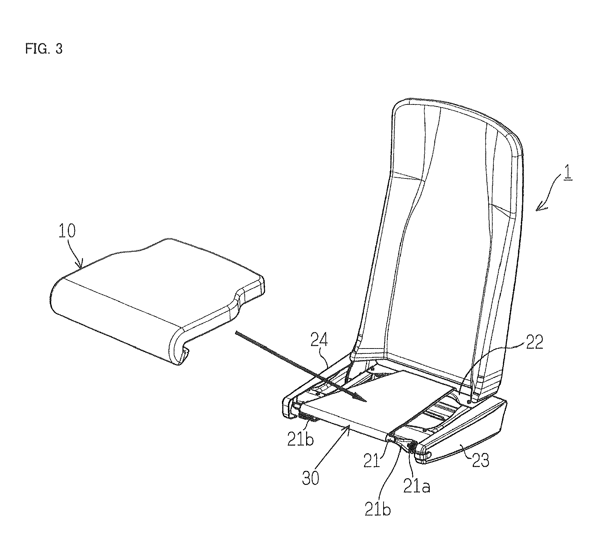

As depicted in Figs. 2(a) and 3, the cushion frame 20 has a front edge frame 21, a rear edge frame 22, and two side frames 23, 24. The front edge frame 21 is extended between leading ends of arms 21b disposed in the vicinities of both ends of a torsion bar 21a extended across the seat cushion portion in the width direction and is elastically supported by the torsion bar 21a.

A base cushion 30 is stretched between the front edge frame 21 elastically supported by the torsion bar 21a and the rear edge frame 22. A two-dimensional net material or cloth or a three-dimensional solid knitted fabric can be used for the base cushion 30.

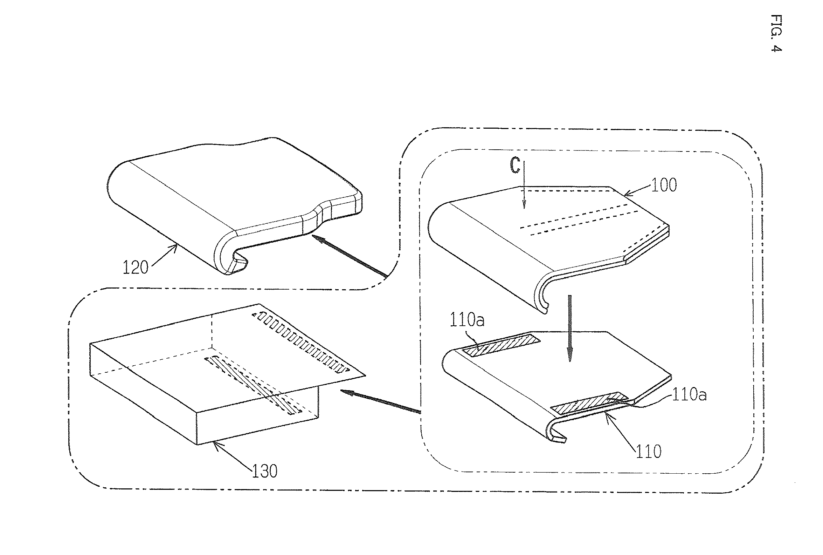

As depicted in Figs. 2 and 4, the cushion structure 10 includes a laminate 100 of three-dimensional solid knitted fabrics, a surface rigidity imparting cushion member 110, and a covering material 120 covering the laminate 100 and the surface rigidity imparting cushion member 110 together.

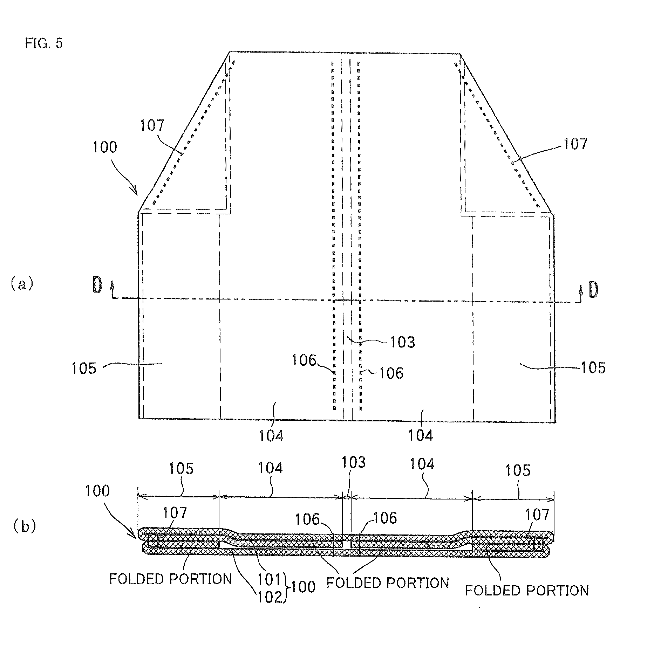

As depicted in Figs. 2 (b) and 5, the laminate 100 is made up of a first three-dimensional solid knitted fabric 101 and a second three-dimensional solid knitted fabric 102. The first three-dimensional solid knitted fabric 101 is folded back inward from the side edges except an area having a predetermined width and a predetermined length in an approximate center portion in the width direction and is disposed with the folded portions located on the lower side. The second three-dimensional solid knitted fabric 102 is folded back inward from the side edges in a folded width shorter than a folded width of the first three-dimensional solid knitted fabric 101 and is disposed with the folded portions located on the upper side such that the folded portions of the second three-dimensional solid knitted fabric 102 face and overlap the folded portions of the first three-dimensional solid knitted fabric 101.

Since the folded portions of the second three-dimensional solid knitted fabric 102 are narrower than the folded portions of the first three-dimensional solid knitted fabric 101, the approximate center portion in the width direction forms a minimal-layer structure portion 103 consisting only of two layers that are the topmost and bottommost layers when the both folded portions overlap with each other; portions adjacent to the minimal-layer structure portion 103 form intermediate layer structure portions 104 consisting of three layers without the folded portions of the second three-dimensional solid knitted fabric 102; and side portions located on the outer side of the intermediate layer structure portions 104 form maximal-layer structure portions 105 consisting of four layers including the both folded portions.

The minimal-layer structure portion 103 is formed as described above and therefore disposed in a predetermined width over a predetermined length in the longitudinal direction of the cushion structure 10 as indicated by broken lines of Fig. 5(a). In the example of Fig. 5, the minimal-layer structure portion 103 is disposed in a width of 5 mm over a length of 420 mm in the center portion in the width direction of the cushion structure 10. If the minimal-layer structure portion 103 is disposed at the center portion in the width direction of the cushion structure 10 as described above, the sacrum abuts on the minimal-layer structure portion 103 when a person is seated. The minimal-layer structure portion 103 has only two layers, i.e., the topmost and bottommost layers, and lacks a layer between the both layers. On the other hand, since the ischial tuberosities located on the both sides of the sacrum are supported by the three-layer intermediate layer structure portions 104, contact feeling of the sacrum is reduced. As a result, no barrier is formed that prevents the motion of the pelvis centering on the sacrum associated with breathing, thereby facilitating smooth breathing movement.

In first restrained regions 106 of the intermediate layer structure portions 104 adjacent to the minimal-layer structure portion 103, the three layers from the topmost layer to the bottommost layer are collectively restrained. In the maximal-layer structure portions 105, only the two overlapping intermediate layers are restrained in second restrained regions 107 located in the vicinities of the both side portions. Although a restraining means is not limited, sewing is preferable since the restraint can easily be achieved. Specifically, the three layers of three-dimensional solid knitted fabrics are sewn all together from the topmost layer to the bottommost layer in the first restrained regions 106, and the two intermediate layers of the three-dimensional solid knitted fabrics are sewn together in the second restrained regions 107.

Since this sewing makes regions outside the first restrained regions 106 free in a region located at the bottommost layer of the second three-dimensional solid knitted fabric 102, longitudinal and lateral movements associated with input of vibrations are allowed leading to generation of a restoring force, vibration absorbability is improved. The vibration absorbability is particularly improved for vibrations and pitching in the longitudinal direction.

The three-dimensional solid knitted fabrics are fabrics having a stereoscopic three-dimensional structure with a pair of ground knitted fabrics arranged away from each other and a multiplicity of connecting fibers reciprocating between, and connecting, the pair of ground knitted fabrics, as disclosed in Japanese Laid-Open Patent Publication No. 2002-331603, for example. One of the ground knitted fabric made of, for example, yarn obtained by twisting single fibers with flat knitted fabric texture (fine texture) continuous in both the wale direction and the course direction and the other ground knitted fabric is made of, for example, yarn obtained by twisting short fibers with a stitch structure having honeycomb (hexagonal) mesh. These knitted fabric textures are obviously arbitrary, can be knitted fabric textures other than the fine texture and the honeycomb texture, and may arbitrarily be combined by using the fine texture for the both knitted fabrics, for example. The connecting yarn is woven between the two ground knitted fabrics such that a predetermined interval is retained between one ground knitted fabric and the other ground knitted fabric.

Among such three-dimensional solid knitted fabrics, those having a thickness ranging from 5 to 10 mm are preferably used in this embodiment. The reason is as follows.

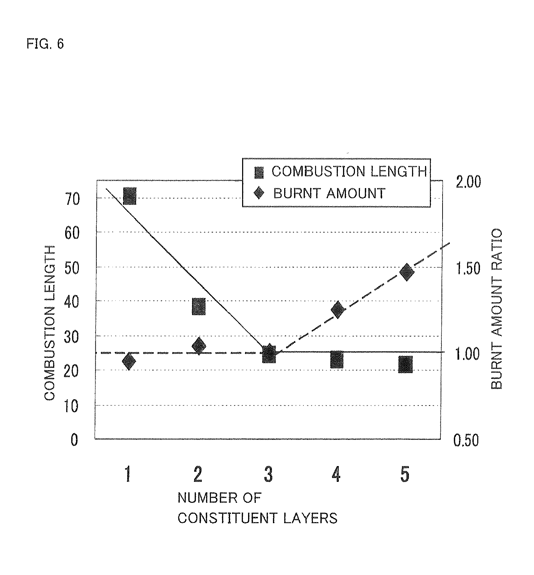

A combustion test was performed using one three-dimensional solid knitted fabric having a thickness within a range of 5 to 10 mm and two to five stacked layers under the same condition. A combustion length and a burnt amount relative to the number of stacked layers of this test are as depicted in Fig. 6, and the combustion length stabilizes with three or more fabrics while the burnt amount increases depending on the number of stacked layers equal to or greater than four. As a result, it is found out that when three three-dimensional solid knitted fabrics are stacked in three layers, a preferable result is acquired in terms of combustion characteristics. Therefore, in this embodiment, the three-layer portions are disposed as the intermediate layer structure portions 104 such that the intermediate layer structure portions 104 are positioned under the ischial tuberosities as described above, and the three-layer intermediate layer structure portions 104 are set to account for a greater proportion of a plane area than the minimal-layer structure portion 103 and the maximal-layer structure portions 105.

Even when the three-dimensional solid knitted fabrics are assumed to be three-layer, the sides of the cushion structure 10 are desirably made thicker so as to enhance supportability for the sides of the buttocks. Therefore, the maximal-layer structure portions 105 have four layers of the three-dimensional solid knitted fabrics and, when it is assumed that the fabrics having a thickness of 10 mm are used, a total thickness is 40 mm and fabrics thicker than 40 mm lead to increase in weight.

Although the three layers of the three-dimensional solid knitted fabrics are sewn all together from the topmost layer to the bottommost layer in the first restrained regions 106 as described above, consideration must be given to an upper limit of penetrable thickness for a needle in a typical sewing machine and, if the upper limit is considerably exceeded, a special sewing machine or needle must be prepared, which increases manufacturing cost.

In consideration of other various conditions based on three layers of the three-dimensional solid knitted fabrics, it is preferred to use the three-dimensional solid knitted fabrics within the thickness range described above.

The surface rigidity imparting cushion member 110 is preferably disposed under the laminate 100 as in the present invention so as to enhance the surface rigidity of the cushion structure 10 and prevent the bottom hitting. Bead foam or a polypropylene-resin plate-like body can be used for the surface rigidity imparting cushion member 110. However, the bead foam is preferably used since the bead form can be used as a floating device described later. The bead foam with a thickness of 2 to 25 mm or the polypropylene-resin plate-like body with a thickness of 0.5 to 1.5 mm is preferably used. Molded foam of resin including at least one of polystyrene, polypropylene, and polyethylene formed with the beads method is used for the bead foam. The expansion ratio is arbitrary and is not limited. Hook-and-loop fastener 110a for one side are fixed in the vicinities of the both sides of the upper surface of the surface rigidity imparting cushion member 110 while hook-and-loop fasteners for the other side (not depicted) are fixed in the vicinities of the both sides of the bottom surface of the laminate 100 made of the three-dimensional solid knitted fabrics, and the laminate 100 is stably retained on the surface rigidity imparting cushion member 110 by coupling the hook-and-loop fasteners 110a to each other.

The laminate 100 and the surface rigidity imparting cushion member 110 are covered with a noncombustible nonwoven fabric 130 and are further covered with a covering material 120 making up a surface skin. Whether the noncombustible nonwoven fabric 130 is disposed is arbitrarily determined. A two-dimensional net material or cloth or a three-dimensional solid knitted fabric can be used for the covering material 120.

The cushion structure 10 of this embodiment formed by covering the laminate 100 and the surface rigidity imparting cushion member 110 with the nonwoven fabric 130 and the covering material 120 is disposed and used on the base cushion 30 stretched between the front edge frame 21 and the rear edge frame 22. Specifically, a pair of hook-and-loop fasteners is disposed on the front surface of the base cushion 30 and the back surface of the cushion structure 10 such that the both surfaces are jointed by the hook-and-loop fasteners.

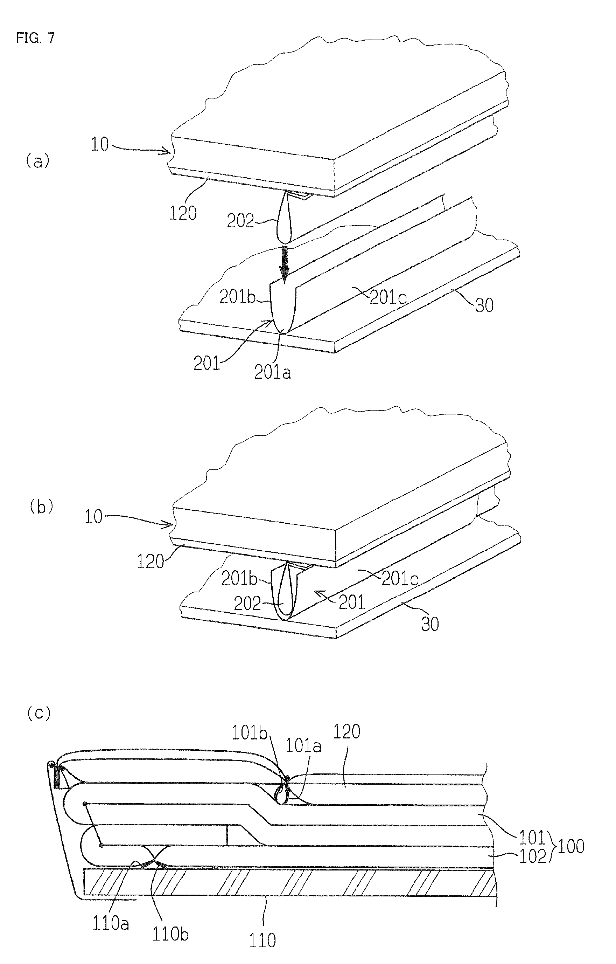

In this case, the hook-and-loop fasteners are preferably attached as depicted in Fig. 7. As depicted in Fig. 7 (a), first, one hook-and-loop fastener 201 having a predetermined width to be attached to the front surface of the base cushion 30 is jointed only in an area 201a around the center in the width direction to the base cushion 30 by sewing etc. Therefore, the one hook-and-loop fastener 201 is not fixed, and is floated, at edge portions 201b, 201c on the both sides. On the other hand, the other hook-and-loop fastener 202 is formed with an approximately U-shaped (loop-shaped) cross-section and jointed at a base end portion to the covering material 120 located on the back side of the cushion structure 10 by sewing etc. Therefore, the other hook-and-loop fastener 202 is projected in an approximate U-shape from the covering material 120.

A set of the one hook-and-loop fastener 201 and the other hook-and-loop fastener 202 is disposed near each of the both side portions in the width direction of the cushion structure 10 and the base cushion 30. As depicted in Fig. 7(b), the other hook-and-loop fastener 202 having the approximately U-shaped cross-section is positioned in an approximate center portion in the width direction of the one hook-and-loop fastener 201, and the edge portions 201b, 201c on the both sides of the one hook-and-loop fastener 201 are jointed to the both side surfaces of the other hook-and-loop fastener 202.

When a person contacts the cushion structure 10 in use, a force is applied in the direction that pulls the cushion structure 10 upward. Therefore, if the one hook-and-loop fastener 201 is attached flat to the base cushion 30 and the other hook-and-loop fastener 202 is also attached flat to the back surface of the cushion structure 120, when a force pulling up the cushion structure 10 is applied, the hook-and-loop fasteners 201, 202 are easily peeled from each other. In contrast, if the one hook-and-loop fastener 201 and the other hook-and-loop fastener 202 are attached as depicted in Fig. 7, the edge portions 201b, 201c on the both sides of the one hook-and-loop fastener 201 are jointed to the both side surfaces of the other hook-and-loop fastener 202 projected with an approximately U-shaped cross-section and, therefore, when a force is applied in the direction that separates the cushion structure 10 away from the base cushion 30, the force acts as a force in a shearing direction that displaces a pair of the jointed hook-and-loop fasteners 201, 202 along the surfaces from each other, and the fasteners are hardly peeled. On the other hand, since the cushion structure 10 is fixed by using the hook-and-loop fasteners 201, 202, the cushion structure 10 can easily be replaced.

If the hook-and-loop fasteners 201, 202 described above are used, the other hook-and-loop fastener 202 is projected with an approximately U-shaped cross-section and the one hook-and-loop fastener 201 is jointed to the side surfaces of the other hook-and-loop fastener 202 and, therefore, vertical and lateral movements are somewhat permitted. This also helps reducing and eliminating a feeling of sitting on a hard material and, since the conformability to motion of the buttocks is enhanced along with the stability, the seating surface is more fit to the buttocks.

The configuration of jointing the one hook-and-loop fastener fixed only in the area near the center and the other hook-and-loop fastener projected in an approximate U-shape is not limited to the joint between the cushion structure 10 and the base cushion 30. Specifically, as depicted in Fig. 9(c), one hook-and-loop fastener 101a can be fixed only in an area near the center to be attached to the first three-dimensional solid knitted fabric 101 of the laminate 100 and the other hook-and-loop fastener 101b can be attached in an approximate U-shape (loop shape) to the covering member 120 for jointing the both fasteners. One hook-and-loop fastener 110 attached to the surface rigidity imparting cushion member 110 can be fixed only in an area near the center for the attachment and the other hook-and-loop fastener 110b can be attached in an approximate U-shape (loop shape) to the second three-dimensional solid knitted fabric 102 of the laminate 100 for jointing the both fasteners.

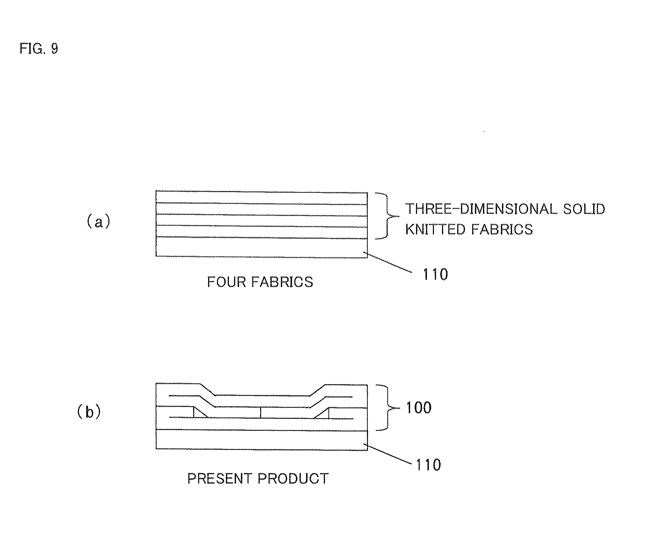

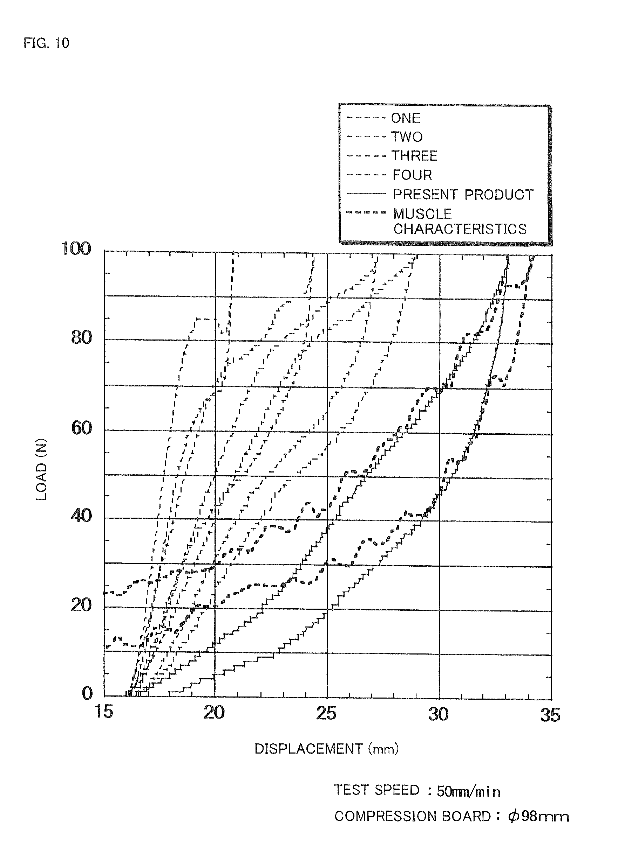

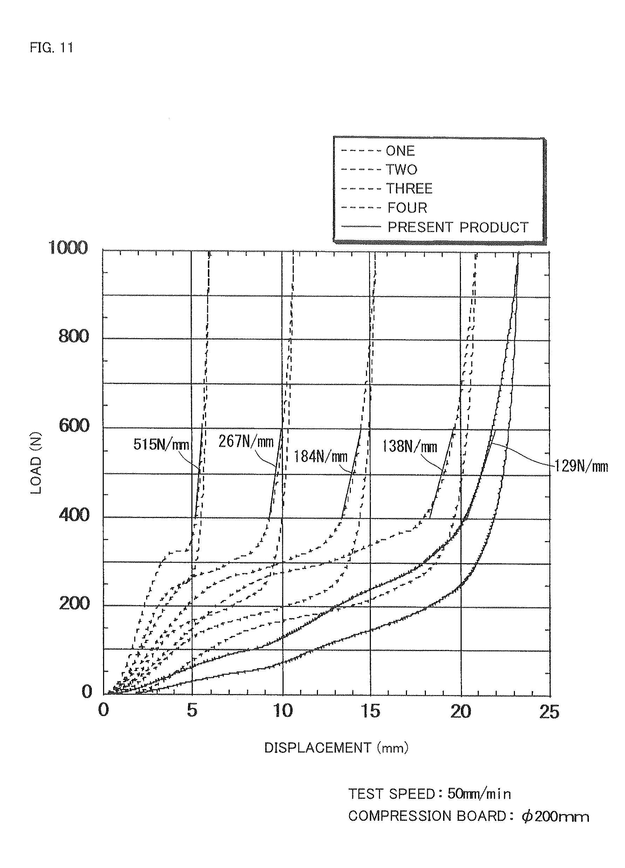

Load-displacement characteristics were measured by applying pressure with pressure plates of 98 mm and 200 mm in diameter at 50 mm/min to one to four 7-mm thick three-dimensional solid knitted fabrics stacked on the surface rigidity imparting cushion member 110 made of bead foam having a thickness of 10 mm as depicted in Fig. 9(a) (comparison examples) and to the laminate 100 of this embodiment fabricated by using two 7-mm thick three-dimensional solid knitted fabrics stacked on the surface rigidity imparting cushion member 110 made of bead foam having a thickness of 10 mm as depicted in Fig. 9(b). The results are depicted in Figs. 10 and 11.

In Figs. 10 and 11, "one", "two", "three", and "four" respectively represent measurement results of the one to four three-dimensional solid knitted fabrics stacked on the surface rigidity imparting cushion member 110 depicted in Fig. 9(a), and "the present product" represents a measurement result of the structure according to the embodiment depicted in Fig. 9(b). Fig. 10 also depicts load-displacement characteristics when pressure is applied to the human buttock muscle under the same conditions.

As can be seen from Fig. 10, a spring constant tends to decrease as the number of stacked layers increases; however, "the present product" tends to approximate the characteristics of the human buttock muscle in the case of the pressure plate having a diameter of 98 mm and makes a reaction force to the buttocks smaller, reducing a sense of discomfort. In the case of pressurization with the pressure plate having a diameter of 200 mm depicted in Fig. 11, the spring constants obtained at 400 N to 600N corresponding to the load under the buttocks of a sitting person weighing 60 to 80 kg are "one" : 515 N/mm, "two" : 267 N/mm, "three" : 184 N/mm, "four" : 138 N/mm, and "the present product" : 129 N/mm. As a result, although the three-layer intermediate layer structure portions 104 are set to account for a greater proportion of a plane area than the minimal-layer structure portion 103 and the maximal-layer structure portions 105 as described above, the present product has a lower spring constant than that of the four simply stacked layers depicted in Fig. 9 (a). This is because the rigidity of a peripheral edge portion is increased by the restraint in the first restrained regions 106 of the intermediate layer structure portions 104 adjacent to the minimal-layer structure portion 103 and the second restrained regions 107 located near the both side portions of the maximal-layer structure portions 105, and piles making up the three-dimensional solid knitted fabrics are stretched, generating tension in ground fabrics of the three-dimensional solid knitted fabrics and increasing a restoring force.

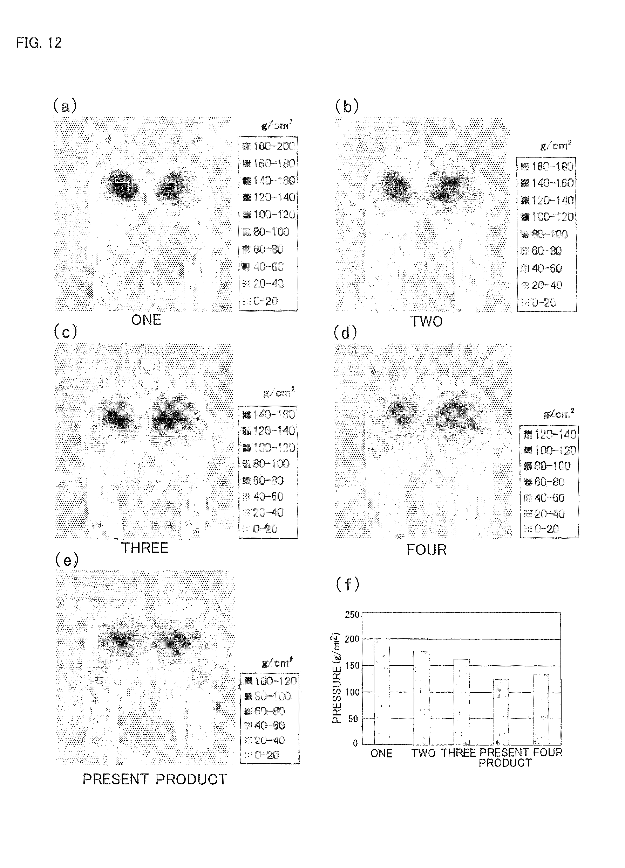

Fig. 12 depicts measurements of body pressure distribution of the cushion structure of Fig. 9(a) (the number of the stacked three-dimensional solid knitted fabrics: one to four) and the cushion structure according to this embodiment of Fig. 9 (b) (the present product). Figs. 12(a) to 12(e) depict measurement results of the body pressure distribution and Fig. 12(f) is a graph of maximum pressure values.

It can be seen from Fig. 12 that the maximum pressure value is reduced and body pressure dispersibility is improved as the number of the stacked three-dimensional solid knitted fabrics increases in the case of the cushion structure of Fig. 9(a), while the cushion structure of the present product has the maximum pressure value of about 122 g/cm², which is lower than about 138 g/cm² of the four three-dimensional solid knitted fabrics stacked in the cushion structure of Fig. 9(a), and has very high body pressure dispersibility although the three-layer intermediate layer structure portions 104 account for a higher proportion. In the case of a typical seat using urethane material, urethane having a thickness on the order of 180 mm is often used and the maximum pressure value in this case is about 170 to 180 g/cm². In the product depicted in Fig. 9(b) according to the cushion structure of this embodiment, a combined thickness of the three-dimensional solid knitted fabrics and the bead foam is 38 mm in the maximal-layer structure portions 105, which are the thickest portions. As can be seen from Fig. 12(e), the present product has higher supportability in the peripheral edge portion with increased rigidity as compared to than the case of Fig. 12(d). Therefore, the configuration of this embodiment can exert higher body pressure dispersibility despite the thin and light structure.

As can be seen by considering the load-displacement characteristics, the body pressure dispersibility, and the combustion test described above, it is most preferred to restrain the three-dimensional solid knitted fabrics at predetermined regions as in this embodiment and to increase a proportion of the three-layer intermediate layer structure portions 104.

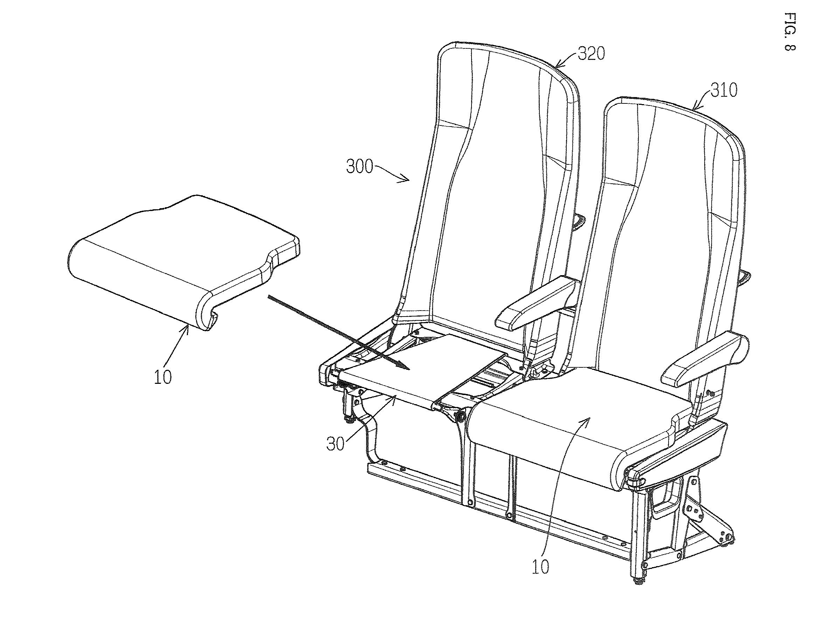

Although the embodiment has been described as the cushion structure 10 of the present invention applied to an automotive seat, the present invention is applicable to any vehicle seats and is not limited. For example, the present invention is applicable to an aircraft seat 300 depicted in Fig. 8. In the aircraft seat 300 depicted in Fig. 8, the base cushions 30 are arranged in a frame including two seats, i.e., an aisle seat 310 and a window seat 320, as is the case with the embodiment, and the cushion structure 10 of the present invention is disposed on each of the base cushions 30.

If bead foam is used as the surface rigidity imparting cushion member 110, the surface rigidity imparting cushion member 110 made of bead foam can be taken out of the covering material 120 and used as a floating device, or the cushion structure 10 including the surface rigidity imparting cushion member 110 made of bead foam can be used as a floating device. Therefore, if a vehicle equipped with the cushion structure 10 of the present invention sinks under water due to an accident etc., the cushion structure 10 removed from the base cushion 30 or the surface rigidity imparting cushion member 110 taken out of the covering material 120 can at least temporarily be used as a floating device. To float a person with a buoyant force of bead foam that is the surface rigidity imparting cushion member 110, it is preferred to use the bead foam having a predetermined thickness or more or to use a plurality of stacked bead foams. For example, if the specific gravity of bead foam is 0.03 g/cm³, when the size of the bead foam is on the order of 450 mm in width and 490 mm in length corresponding to a vehicle seat for one person, a thickness can be equal to or greater than about 20 mm so as to acquire a buoyance force floating a person with the head above water. If thinner bead foam is used, a plurality of layers of bead foam can be used to acquire the same buoyance force. Therefore, since a person can be floated by smaller-size bead form, excellent escape property is achieved. The bead foam is desirably waterproofed on at least one surface, preferably, on all the surfaces. Any means is available for waterproofing and includes, for example, a means of affixing nonwoven fabric etc., with adhesive onto at least one surface of the bead foam. If waterproofing is implemented by a waterproof film collectively covering the outer peripheral surfaces of bead foam (the surface rigidity imparting cushion member 110) and the laminate 100 of three-dimensional solid knitted fabrics, an effect of preventing ingress of water can be enhanced when the entire cushion structure 10 is used as a floating device.

### Explanations of Letters or Numerals

- 1: automotive seat
- 10: cushion structure
- 100: laminate
- 101: first three-dimensional solid knitted fabric
- 102: second three-dimensional solid knitted fabric
- 103: minimal-layer structure portion
- 104: intermediate layer structure portion
- 105: maximal-layer structure portion
- 110: surface rigidity imparting cushion member
- 120: covering material
- 130: nonwoven fabric
- 20: cushion frame
- 21: front edge frame
- 22: rear edge frame
- 30: base cushion
- 201, 202: hook-and-loop fastener
- 300: aircraft seat

## Claims

1. A cushion structure for a vehicle seat having three-dimensional solid knitted fabrics,
the three-dimensional solid knitted fabrics formed as a laminate of a plurality of stacked layers,
the cushion structure being disposed with a minimal-layer structure portion not having at least one intermediate layer between a topmost layer and a bottommost layer, in an approximate center portion in a width direction with a predetermined width and a predetermined longitudinal length.

2. The cushion structure of claim 1, wherein both side portions of the laminate are maximal-layer structure portions having the three-dimensional solid knitted fabrics stacked at least two layers more than the minimal-layer structure portion, and wherein intermediate layer structure portions with the number of layers greater than the minimal-layer structure portion and fewer than the maximal-layer structure portions are formed between the minimal-layer structure portion and the maximal-layer structure portions.

3. The cushion structure of claim 1 or 2, wherein the minimal-layer structure portion consists of two layers that are the topmost layer and the bottommost layer.

4. The cushion structure of claim 2, wherein the minimal-layer structure portion consists of two layers that are the topmost layer and the bottommost layer, wherein the intermediate layer structure portions consist of three layers including the topmost layer and the bottommost layer, and wherein the maximal-layer structure portions consist of four layers including the topmost layer and the bottommost layer.

5. The cushion structure of claim 4, wherein
the cushion structure is formed by using the two three-dimensional solid knitted fabrics, wherein
a first three-dimensional solid knitted fabric is folded back inward from side edges except an area having a predetermined width and a predetermined length in the approximate center portion in the width direction, wherein
a second three-dimensional solid knitted fabric is folded back inward from side edges in a folded width narrower than a folded width of the first three-dimensional solid knitted fabric, wherein
the maximal-layer structure portions are made up of overlap areas between folded portions of the first three-dimensional solid knitted fabric and folded portions of the second three-dimensional solid knitted fabric, wherein
the intermediate layer structure portions are made up of overlap portions between the folded portions of the first three-dimensional solid knitted fabric and an area without the folded portions of the second three-dimensional solid knitted fabric, and wherein
the minimal-layer structure portion is made up of an overlap portion between an area without the folded portions of the first three-dimensional solid knitted fabric and the area without the folded portions of the second three-dimensional solid knitted fabric.

6. The cushion structure of claim 5, wherein
the second three-dimensional solid knitted fabric is located on the lower side with the first three-dimensional solid knitted fabric located on the upper side of the second three-dimensional solid knitted fabric, and wherein
the folded portions of the first three-dimensional solid knitted fabric are formed by folding toward the lower side while the folded portions of the second three-dimensional solid knitted fabric are formed by folding toward the upper side.

7. The cushion structure of claim 5 or 6, wherein three layers from the topmost layer to the bottommost layer are collectively restrained in regions of the intermediate layer structure portions adjacent to the minimal-layer structure portion, and wherein only two overlapping intermediate layers are restrained in the maximal-layer structure portions.

8. The cushion structure of claim 7, wherein the three layers from the topmost layer to the bottommost layer are collectively restrained by sewing in the regions of the intermediate layer structure portions adjacent to the minimal-layer structure portion, and wherein only the two overlapping intermediate layers are restrained by sewing in the maximal-layer structure portions.

9. The cushion structure of any one of claims 5 to 8, wherein the first three-dimensional solid knitted fabric and the second three-dimensional solid knitted fabric have a thickness ranging from 6 to 8 mm.

10. The cushion structure of claim 6, wherein a surface rigidity imparting cushion member for imparting predetermined surface rigidity is further disposed under the second three-dimensional solid knitted fabric.

11. The cushion structure of claim 10, wherein the surface rigidity imparting cushion member is made of bead foam or a polypropylene-resin plate-like body.

12. The cushion structure of claim 11, wherein the cushion structure or the surface rigidity imparting cushion member is used as a floating device.

13. The cushion structure of claim 12, wherein the surface rigidity imparting cushion member is waterproofed on at least one surface.

14. The cushion structure of claim 12, wherein the cushion structure is waterproofed on outer peripheral surfaces.

15. The cushion structure of any one of claims 10 to 14, wherein the three-dimensional solid knitted fabrics and the surface rigidity imparting cushion member are covered with a covering material.

16. A vehicle seat comprising: a base cushion material extended between a front edge frame and a rear edge frame of a cushion frame, wherein
the cushion structure of any one of claims 1 to 15 is disposed on the base cushion.

17. The vehicle seat of claim 16, wherein with regard to the front edge frame and the rear edge frame, at least the front edge frame is elastically and longitudinally rotatably supported by a torsion bar.

18. The vehicle seat of claim 16 or 17, wherein the cushion structure and the base cushion are coupled by one hook-and-loop fastener attached to one of facing surfaces thereof and the other hook-and-loop fastener attached to the other facing surface thereof.

19. The vehicle seat of claim 18, wherein the one hook-and-loop fastener is attached without fixing both side edge portions, and wherein the other hook-and-loop fastener is attached to project with an approximately U-shaped cross section.

20. The vehicle seat of claim 19, wherein the one hook-and-loop fastener is attached to a front surface of the base cushion, and wherein the other hook-and-loop fastener is attached to a back side of the cushion structure.
